# EUROPEAN PATENT APPLICATION

(11) **EP 2 682 678 A2**
(43) Date of publication of application: **08.01.2014**
(21) Application number: 13382270.0
(22) Date of filing: 04.07.2013
(51) Int. Cl.: F23N 1/00

(54) **Gas cock adapted to a multiple flame rings burner**

(30) Priority: 06.07.2012 ES 201231068
(71) Applicant: Coprecitec, S.L., 20550 Aretxabaleta (ES)
(72) Inventor: Ayastuy Aretxaga, Iñaki, 20570 Bergara (ES); Arriola-Bengoa Unzueta, Imanol, 01193 Erentxun (ES)
(74) Representative: Igartua, Ismael

(57) **Abstract**

Gas cock adapted to a multiple burner comprising a main ring and at least one secondary ring, the cock (1) comprising a body (2) comprising an inlet conduit (3) and outlet conduits (4,5), each of which is suitable for conducting gas to the corresponding ring, a regulating element (40) housed in the body (2) and suitable for regulating the incoming gas flow towards at least one of the outlet conduits (4,5) depending on the angular position thereof, and a knob (6) coupled to the regulating element (40), said knob (6) being rotary between an initial position and a final position. The cock (1) comprises safety means (20) blocking the outlet conduit (5) in a critical turning interval of the knob (6) arranged between the initial turning position and the final turning position.

## Description

### TECHNICAL FIELD

The present invention is related to a gas cock adapted to a multiple burner, particularly to a dual burner.

### PRIOR ART

Gas cocks suitable for burners of home appliances comprising a central ring and at least one outer ring concentric with said central ring are known. The gas cock comprises at least two outlet conduits that independently feed the central ring and the outer ring, and a regulating element that can be operated by a rotary knob for adjusting the distribution of gas only towards the central ring or simultaneously towards the central ring and the outer ring.

Cocks are known in which the turning of the knob by the user in the same direction entails the progressive feed initially of only the central ring and subsequently of both rings at the same time.

In dual burners problems with unburned gases are generated in positions of the knob close to transitions from feeding both rings to feeding only the central ring. To prevent that problem, document IT1380968B defines a central position of the knob from which it can be turned in one direction to adjust the gas flow through a single outlet between a maximum value and a minimum value, and in the opposite direction, to adjust the gas flow through the gas supply for both rings.

In document WO2005003610A1, the gas cock further comprises elastic means suitable for preventing a stable positioning of the rotary knob in a predefined angular interval for the purpose of preventing the user from being able to position the knob in positions in which it is considered that unburned gas could exit through the rings.

### DISCLOSURE OF THE INVENTION

The object of the invention is to provide a gas cock adapted to a multiple burner comprising a main ring and at least one secondary ring according to claims.

The gas cock comprises a body comprising a gas inlet conduit and gas outlet conduits, each of which is suitable for conducting gas to the corresponding ring, a regulating element housed in the body and suitable for regulating the incoming gas flow towards at least one of the outlet conduits depending on the angular position thereof; and a knob coupled to the regulating element, said knob being rotary between an initial turning position and a final turning position.

The gas cock comprises safety means blocking the outlet conduit that feeds the secondary ring in a critical turning interval of the knob. The critical interval is arranged between the initial turning position and the final turning position.

An optimized and safe gas cock adapted to a multiple burner is thus obtained. By blocking the outlet conduit during the critical interval, gas that cannot be burned is prevented from exiting, such that when the user operates the knob, he/she can feed gas to the main ring and to the main ring and the secondary ring without there being a risk of unburned outgoing gas.

These and other advantages and features of the invention will become evident in view of the drawings and the detailed description of the invention.

### DESCRIPTION OF THE DRAWINGS

Figure 1 shows a perspective view of the gas cock according to the invention with a partial section.
Figure 2 shows another perspective view of the gas cock according to the invention with another partial section.
Figure 3 shows another perspective view of the gas cock according to the invention with another partial section.
Figure 4 shows a cross-section of the gas cock shown in Figure 1 in a position wherein the main ring and the secondary ring are fed.
Figure 5 shows an axial section of the gas cock shown in Figure 1 in the position shown in Figure 4.
Figure 6 shows a cross-section of the gas cock shown in Figure 1 in a critical position.
Figure 7 shows an axial section of the gas cock shown in Figure 1 in the second position shown in Figure 6.
Figure 8 shows a perspective view of blocking means comprised in the gas cock shown in Figure 1.
Figure 9 shows a perspective view of a support comprised in the blocking means shown in Figure 8.
Figure 10 shows a perspective view of a cap comprised in the gas cock shown in Figure 1.
Figure 11 shows a view of a regulating element comprised in the gas cock shown in Figure 1.
Figure 12 shows a cross-section of the gas cock shown in Figure 1 in an initial position OFF.
Figure 13 shows a cross-section of the gas cock shown in Figure 1 in a position of maximum flow towards a first outlet conduit.
Figure 14 shows another cross-section of the gas cock shown in Figure 1 in an initial position OFF.
Figure 15 shows a cross-section of the gas cock shown in Figure 1 in a position of maximum flow towards a second outlet conduit.
Figure 16 shows an axial section of a second embodiment of a gas cock according to the invention in a position in which the main ring and the secondary ring are fed.
Figure 17 shows an axial section of a second embodiment of the gas cock according to the invention in a critical position.
Figure 18 shows a perspective view of blocking means comprised in the gas cock shown in Figure 16.
Figure 19 shows a perspective view of a push rod comprised in the blocking means shown in Figure 18.
Figure 20 shows a perspective view of the blocking means assembled in a rod, comprised in the gas cock shown in Figure 16, arranged in an initial axial position.
Figure 21 shows a perspective view of blocking means assembled in a rod, comprised in the gas cock shown in Figure 17, arranged in a final axial position.
Figure 22 shows an axial section of a third embodiment of a gas cock according to the invention in a position in which the main ring and the secondary ring are fed.
Figure 23 shows a perspective view of blocking means comprised in the gas cock shown in Figure 22.

### DETAILED DISCLOSURE OF THE INVENTION

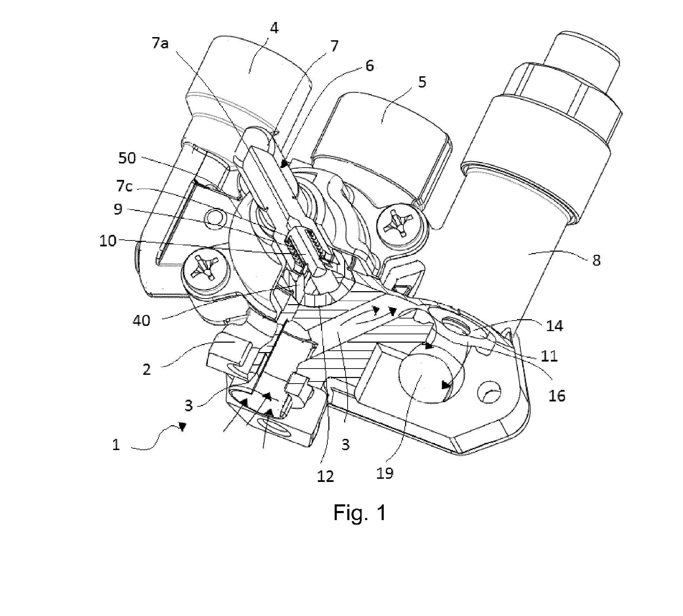

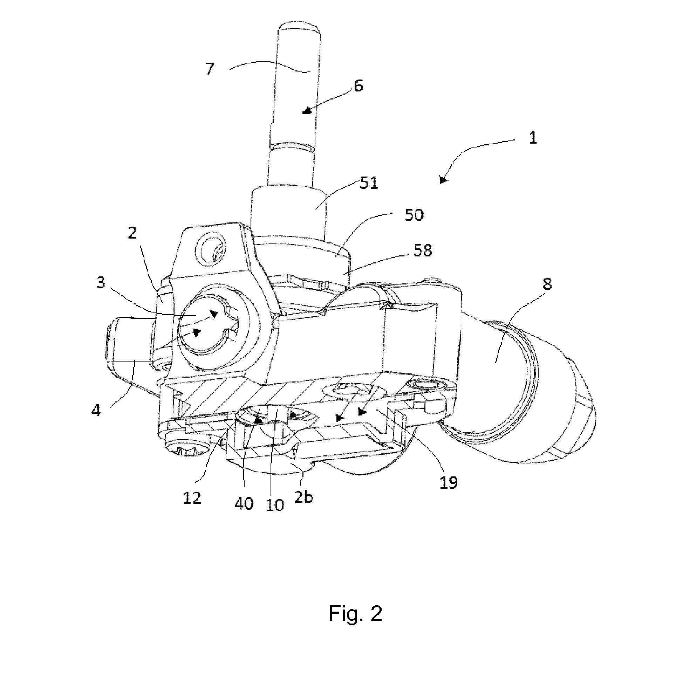

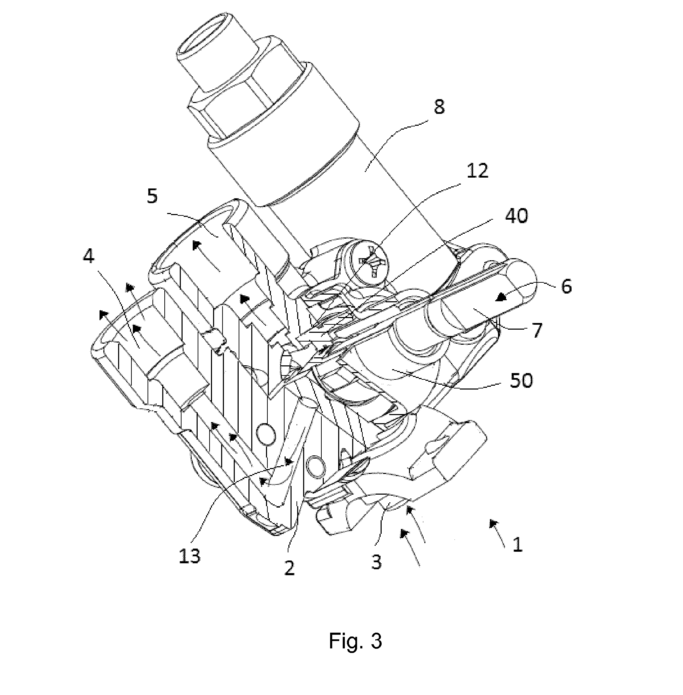

Figures 1 to 3, 5, 7, 16 and 17 show a gas cock 1 according to the invention, adapted to a dual burner (not depicted) comprising a main ring and a secondary ring, neither ring being depicted in the drawings. The main ring is controlled by a thermocouple (not depicted) that feeds a safety valve 11, whereas the secondary ring is not controlled by any thermocouple. In the described embodiment, the secondary ring is arranged substantially concentric to the main ring, outside of said main ring.

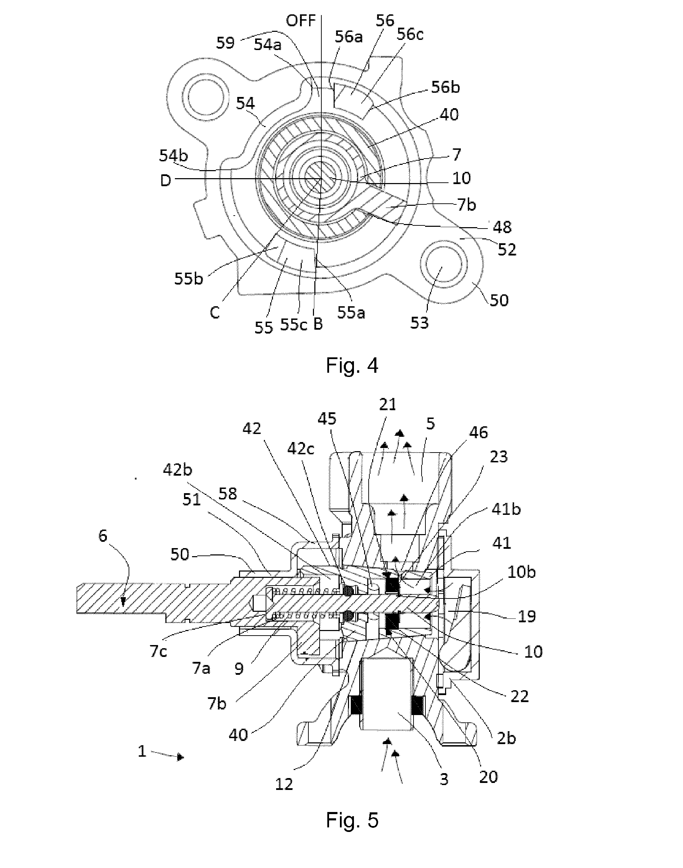

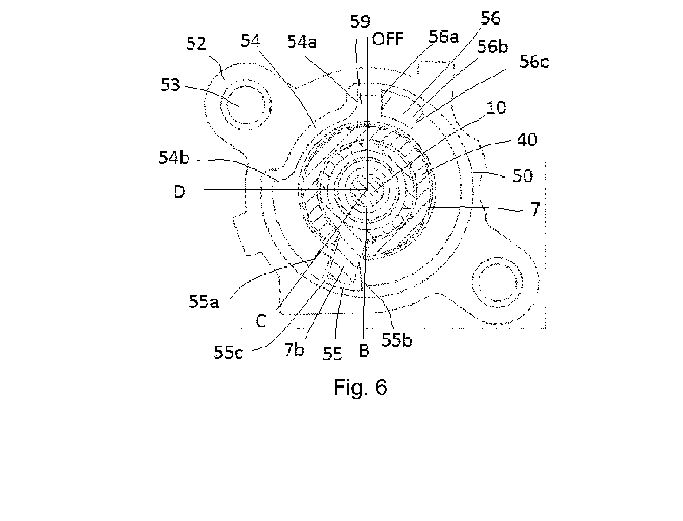

The gas cock 1 comprises a body 2 comprising a gas inlet conduit 3, a first gas outlet conduit 4 suitable for conducting the incoming gas to the main ring and a second outlet conduit 5 suitable for conducting the incoming gas to the secondary ring, a regulating element 40 housed in the body 2 and suitable for regulating the incoming gas flow towards the outlet conduits 4,5 depending on the angular position thereof, and a knob 6 coupled to the regulating element 40, said knob 6 being rotary between an initial turning position (position OFF in Figures 4 and 6) and a final turning position (position D in Figures 4 and 6).

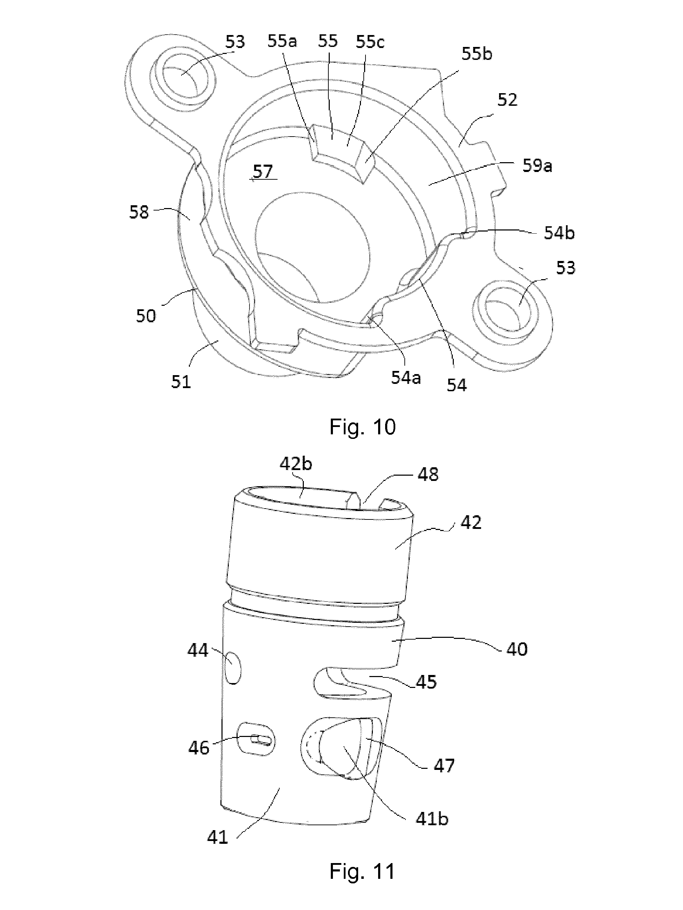

The regulating element 40 is an element having a hollow frustoconical geometry that is arranged housed in a frustoconical cavity 12 comprised in the body 2. The regulating element 40 is arranged tightly in said cavity 12, being able to rotate with respect to the body 2. The regulating element 40 shown in detail in Figure 11 comprises a first substantially frustoconical part 41 comprising a first cavity 41b communicated with the first outlet conduit 4 through a first groove 45 or a first hole 44 and with the second outlet conduit 5 through a second groove 47 and a third groove 46, respectively, and a second part 42 following said first part 41, comprising a second cavity 42b communicated with the first cavity 41b and inside which a shaft 7 of the knob 6 is at least partially housed. Both the first groove 45 and the first hole 44 are perimetrally aligned. The second groove 47 and third groove 46 are also arranged perimetrally aligned.

The gas cock 1 comprises safety means 20 blocking the second outlet conduit 5 in a critical turning interval of the knob 6, the critical turning interval being arranged between the initial turning position and the final turning position. In the embodiments shown in the drawings, the initial turning position corresponds with the position OFF shown in Figures 4 and 6, and the final turning position corresponds with the position D shown in Figures 4 and 6. The critical turning interval corresponds with the interval B-C shown in Figures 4 and 6. Said critical turning interval B-C extends from about 175° (position B) to about 218° (position C) from the initial turning position (position OFF).

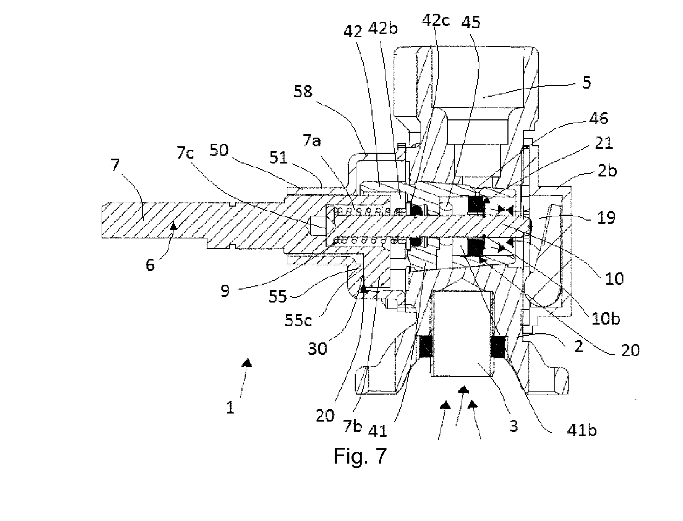

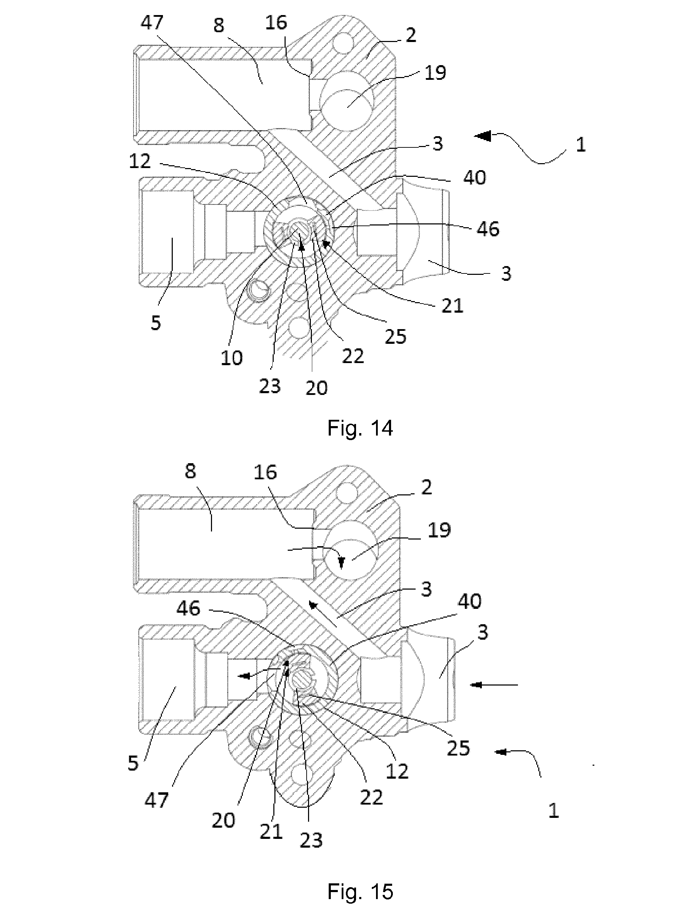

The safety means 20 comprise blocking means 21 suitable for being axially moved into the regulating element 40 from an initial axial position, shown in Figures 5, 1616 and 22, to a final axial position, shown in Figures 7 and 15, in which they block the exit of gas towards the second outlet conduit 5 through the regulating element 40 in the critical turning interval B-C of the knob 6.

The initial axial position corresponds with the axial position of the knob 6 in normal operation, shown in Figures 5, 16 and 22, and the final axial position corresponds with the position of the knob 6 when it is pressed, shown in Figures 7 and 15. In the embodiments shown, the movement of the knob 6 between both axial positions is at least 1.0 mm, said movement being about 3.0 mm at most.

The knob 6 comprises the shaft 7 which is arranged coupled to the regulating element 40 and an outer operating element (not depicted) coupled to an end of the shaft 7 and can be operated by the user. At the other end, the shaft 7 has a flange 7b, shown in Figures 4-7, 16-17 and 22, which prolongs radially, the flange 7b being housed in an axial groove 48 comprised in the regulating element 40, shown in Figure 11, such that the shaft 7 and the regulating element 40 are arranged in an assembled and integral manner with respect to the turning.

The safety means 20 further comprise a rod 10 coupled to the shaft 7 through a spring 9, the blocking means 21 being coupled to the rod 10. The rod 10 goes through the regulating element 40, being substantially aligned with the shaft 7. The shaft 7 particularly comprises a housing 7a where an end of the rod 10 is arranged housed, the spring 9 being arranged coaxial to the rod 10 inside the housing 7a, supported at one end against a base 7c of the housing 7a and a base 42c of the second cavity 42 of the regulating element 40. The rod 10 axially goes through the regulating element 40, the blocking means 21 being housed in the first cavity 41b of the regulating element 40.

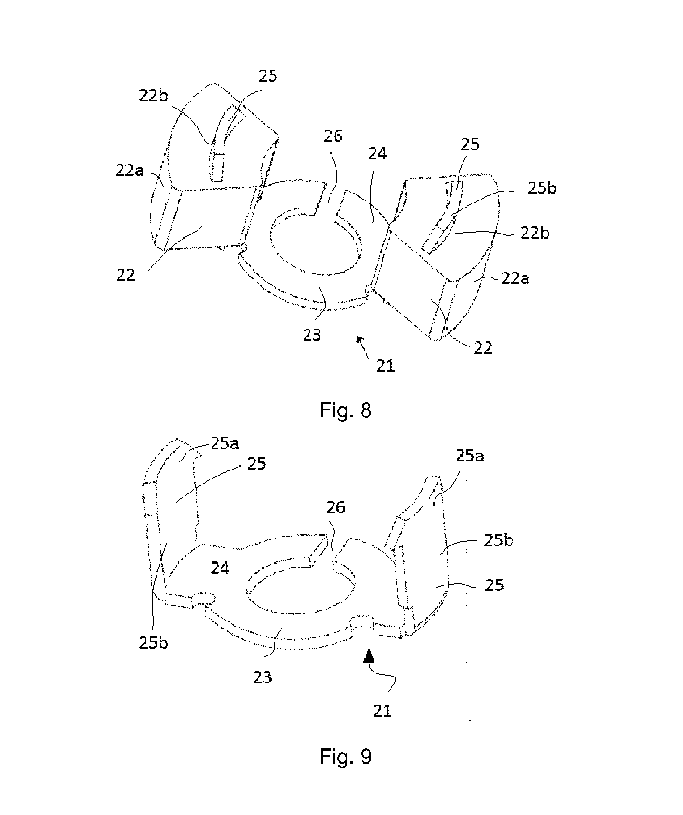

In a first embodiment of the invention shown in Figures 5 and 7, the blocking means 21, shown in detail in Figures 8 and 9, comprise a support 23 which is arranged fixed integrally to the rod 10 and at least one blocking element 22 which is arranged tightly fitted to the demarcating wall of the first cavity 41b of the regulating element 40. To that end, each blocking element 22 comprises a surface 22a having a geometry similar to that of the demarcating wall of the first cavity 41b of the regulating element 40 or adaptable to said geometry.

The support 23 comprises a substantially ring-shaped base 24 cooperating with a ring-shaped recess 10b in the rod 10, shown in Figures 5 and 7, for fixing said support 23 to the rod 10, and at least one extension 25 extending substantially orthogonally from the base 24, the blocking element 22 being inserted in the extension 25. In the embodiment shown in the drawings, the blocking means 21 comprise two blocking elements 22 each of which is inserted in the corresponding extension 25, the extensions 25 and therefore the blocking elements 22 being arranged diametrically opposite one another; the sealing of the third groove 46 of the regulating element 40 is thus improved by means of one of the blocking elements 22.

Each extension 25 includes a first part 25a and a second part 25b having a width greater than the width of the first part 25a, such that the second part 25b abuts the blocking element 22 once said blocking element 22 is inserted through the corresponding groove 22b, as shown in Figure 9.

Each blocking element 22 is made of an elastomeric material adaptable to the side wall of the first cavity 41b of the regulating element 40. The support 23 is made of a metal material providing sufficient rigidity to the blocking means 21. The base 24 of the support 23 further includes a notch 26 in a substantially radial direction providing the necessary flexibility and elasticity to the support 23 for keeping the blocking element 22 in contact with the side wall of the first cavity 41b, allowing the axial movement of the blocking means 21 with respect to the regulating element 40 and locking the turning of said blocking means 21 with respect to the regulating element 40.

In other non-depicted embodiments, the support 23 and the blocking elements 22 can form a single part. The blocking means 21 can be made of a plastic material.

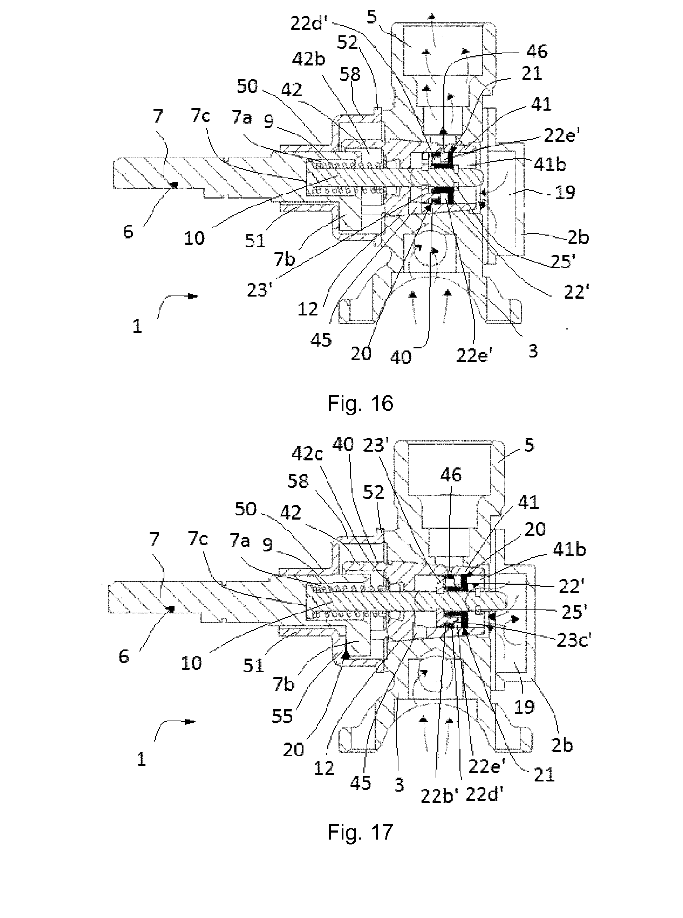

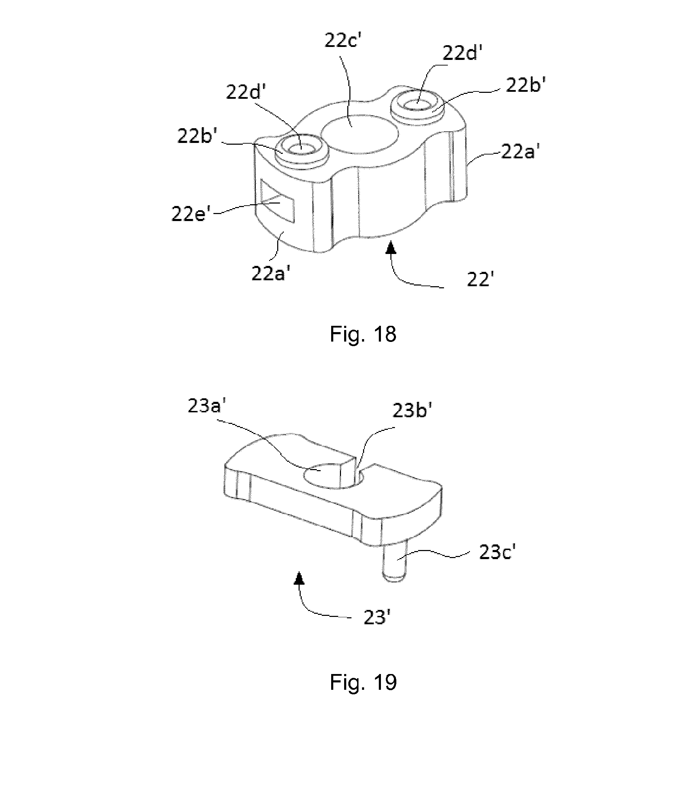

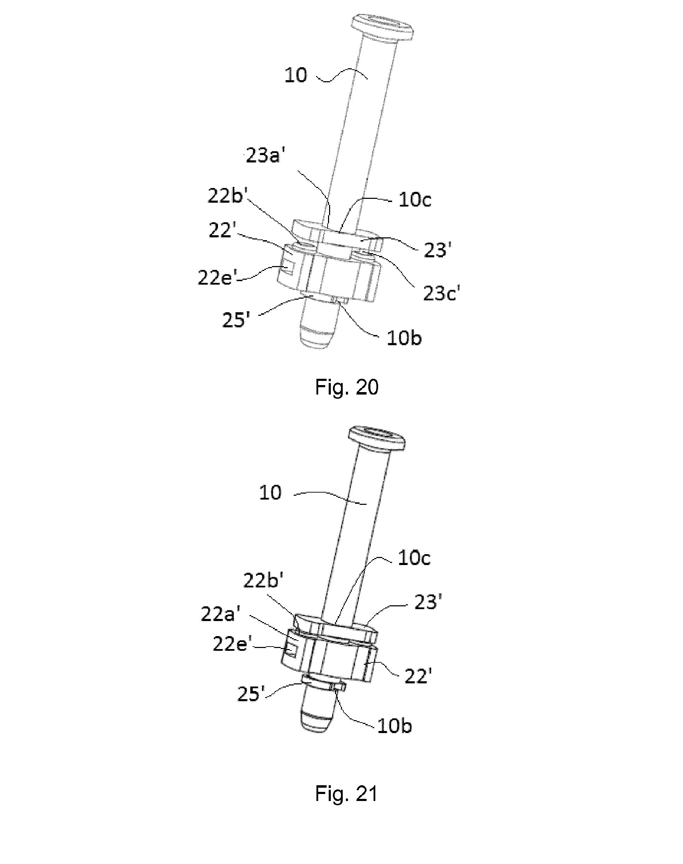

In a second embodiment, shown in Figures 16 to 21, the blocking means 21 comprise a blocking element 22' which is arranged tightly fitted to the demarcating wall of the first cavity 41b of the regulating element 40 and a push rod 23'. The blocking element 22' comprises a side surface 22a' having a geometry similar to that of the demarcating wall of the first cavity 41b or adaptable to said geometry.

The push rod 23' is arranged coupled to a ring-shaped recess 10c arranged in the rod 10. To that end, the substantially planar push rod 23' comprises a hole 23a' that the rod 10 goes through, comprising a slot 23'b to facilitate inserting the rod 10. The push rod 23' further comprises an extension 23c' extending in an axial direction. The blocking element 22' comprises a hole 22c' which the rod 10 goes through, at least one protuberance 22b' axially projecting from a substantially planar end of the blocking element 22' and arranged facing the push rod 23', as shown in Figures 16 and 17. The protuberance 22b' comprises a housing 22d' in which the extension 23c' in the initial axial position shown in Figure 16 is partially housed. In traveling between the initial axial position and the final axial position shown in Figure 17, when the shaft 7 is pressed, the push rod 23' together with the rod 10 move axially with respect to the blocking element 22' until the protuberance 22b' abuts against the push rod 23', the blocking element 22' being moved axially after that time together with the rod 10 to the final axial position, shown in Figure 17, in which the surface 22a' of the blocking element 22 seals against the third groove 46 of the regulating element 40, preventing gas from exiting towards the second outlet conduit 5. The blocking element 22' is made of an elastomeric material, adaptable to the side wall of the first cavity 41b of the regulating element 40. The blocking element 22' comprises an opening 22e' on each side surface 22a', such that in the initial axial position, said opening 22e' is communicated with the third groove 46 and with the second outlet conduit 5, whereas in the final axial position, said opening 22e' is moved with respect to the third groove 46.

Finally, the blocking means 21 of this second embodiment comprise a stop element 25' fixed in a second axial groove 10b of the rod 10, such that it prevents unwanted movement of the blocking element 22' with respect to the rod 10. Given the geometry of this second embodiment, there are fewer tolerance requirements for the blocking means 21 with respect to the remaining elements.

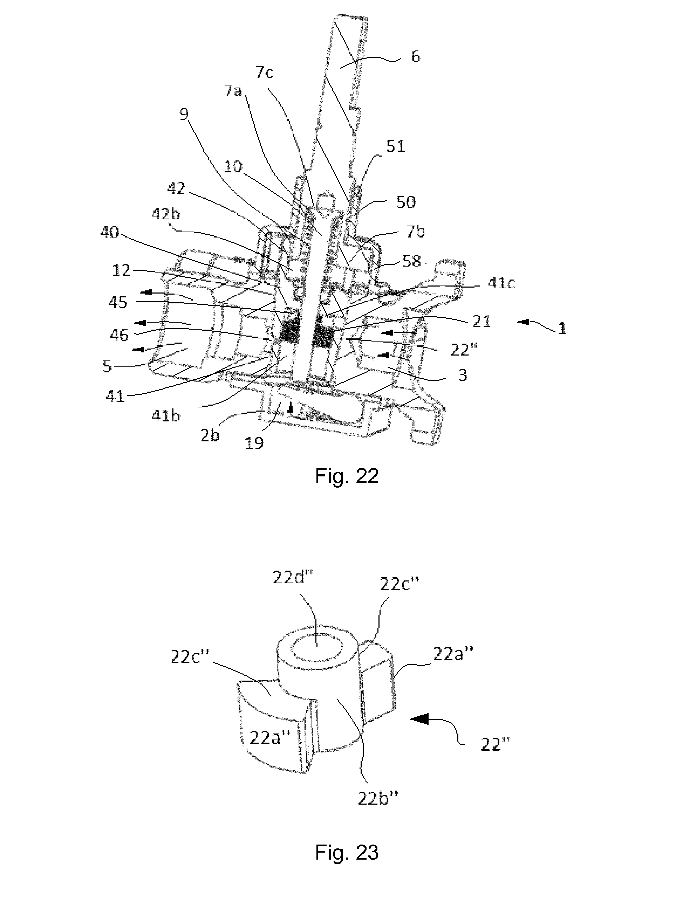

In a third embodiment, shown in figures 22 and 23, blocking means 21 comprise a blocking element 22" which is tightly arranged to the delimitating wall of the first cavity 41b of the regulating element 40. The blocking element 22" comprises a first part 22b", substantially cylindrical and extensions 22c" which projects continuous, and radial from the first part 22b". The extensions 22c" project diametrically opposed from the first part 22b". On the other hand, the first part 22b" is passed through an axial through hole 22d" so that the blocking element 22" is arranged coupled tightly to the rod 10 which passes through the hole 22d" moving fixed to the rod. Each extension 22c" comprises a lateral surface 22a" of a geometry similar to that of the first cavity 41b demarcating wall or adaptable to said geometry.

In the initial axial position of the rod 10, shown in figure 22, an end of the first part 22b" is in contact with a bottom 41c of the first cavity 41b of the regulating element 40. When the shaft 7 is pressed to the final axial position (not shown in figures), the blocking element 22" is moved with the rod 10 to the position wherein the surface 22a" of the blocking element 22" seals against the third groove 46 of the regulating element 40 avoiding the gas exit to the second outlet conduit 5, in the critical turning interval B-C of the knob 6. The blocking element 22' is made of an elastomeric material, adaptable to the lateral wall of the first cavity 41b of the regulating element 40.

In the embodiments described and shown in the drawings, the turning between the blocking means and the regulating element 40 is locked.

In other non-depicted embodiments, for the purpose of locking the turning between the blocking means 21 and the regulating element 40 and allowing the relative axial movement between them, the regulating element 40 can comprise at least one recess which extends axially and in which a blocking element 22;22';22" is at least partially housed.

On the other hand, the knob 6 is arranged coupled to the body 2 through a cap 50. The cap 50, shown in detail in Figure 10, comprises a substantially cylindrical body 58, a neck 51 coaxial to the body 58 and adapted to the shaft 7, and a base 52 with holes 53 through which the cap 50 is screwed on to the body 2 of the cock 1. The body 58 of the cap 50 is demarcated by a substantially cylindrical side wall 58a and a bottom 57, the body 58 comprising a deep drawing 54 in the side wall 58a the ends 54a, 54b of which define the initial position OFF and the final position D, respectively, and a projection 55 axially projecting from the bottom 57 towards the inside of the body 58.

The locking means 30 of the safety means 20 comprise the projection 55 in the cap 50 and the flange 7b in the shaft 7 of the knob 6, such that the flange 7b collaborates with the projection 55 to keep the blocking means 21 in the final axial position, closing the passage of gas towards the second outlet conduit 5 during the critical interval B-C. The projection 55 extends at an angle that is substantially equal to that corresponding to the critical interval B-C. In the embodiment shown in the drawings, this angle is about 43°. The projection 55 comprises a first surface 55a substantially orthogonal to the bottom 57 and a second curved surface 55b, and a third surface 55c against which the flange 7b of the shaft 7 abuts during the critical interval B-C, the third surface 55c following the first surface 55a and the second surface 55b following the third surface 55c, respectively, and the first surface 55a and the second surface 55b defining the initial position B and final position C of the critical interval, respectively.

The cap 50 further comprises a safety projection 56 axially projecting from the bottom 57 towards the inside of the body 58. The safety projection 56 comprises a first surface 56a substantially orthogonal to the bottom 57, which is arranged facing the first end 54a of the deep drawing 54 demarcating a housing 59 in which the flange 7b of the shaft 7 in the initial position OFF is arranged housed, such that an unwanted turning of the knob 6 which would cause gas to exit is prevented. The safety projection 56 has a height that the flange 7b must surpass to allow the entrance of gas towards the outlet conduits 4 and 5. The safety projection 56 comprises a second surface 56c demarcating the height of the safety projection 56 and a third curved surface 56b which joins the second surface 56c with the bottom 57. The third surface 56b follows the second surface 56c and the third surface 56b follows the second surface 56c, respectively.

Starting from the position OFF of the knob 6, in which there is no gas supply to any of the outlet conduits 4,5 and in which the flange 7b of the shaft 7 is housed in the housing 59 between one of the ends 54a of the deep drawing 54 and the first surface 56a of the safety projection 56, once the user initially presses the knob 6 in order to overcome the safety projection 56 and be able to freely turn the knob 6 counterclockwise to the initial position B of the critical interval B-C, gas flows through the two outlet conduits 4,5 feeding both the main ring and the secondary ring. The incoming gas coming in through the inlet conduit 3 circulates to a chamber 19, shown in Figures 1 to 3, 5, 7, 16 and 17, once the safety valve 11 is energized. The safety valve 11 is an electromagnetic valve housed in a conduit 8, arranged substantially parallel to the gas outlet conduits 4, 5. When said safety valve 11 is energized, either because it is initially fed by a battery or power source or because the thermocouple continues to keep it energized when the main ring is on, a blocking member 14 of the safety valve 11 is kept spaced from a seating 16 comprised in the body 2 such that the inlet conduit 3 remains communicated with the chamber 19, allowing the entry of gas into said chamber 19. The chamber 19 is demarcated by the body 2 and an auxiliary cap 2b, said chamber 19 being communicated with the frustoconical cavity 12 in which the regulating element 40 is housed. The gas passes from the chamber 19 to the first cavity 41b of the regulating element 40, exiting towards the first outlet conduit 4 through a first intermediate conduit 13 and/or a second intermediate conduit 17 both comprised in the body 2, the cavity 12 communicating with the first outlet conduit 4 and towards the second outlet conduit 5 that has been communicated directly with the first cavity 41b. The second intermediate conduit 17 is arranged communicated with the first intermediate conduit 13 (not shown in the drawings). In any position of the knob 6, from the position OFF to the initial position B of the critical interval B-C, the knob 6 is arranged in the initial axial position. When turning the knob 6 and therefore the regulating element 40 from the initial position OFF to the initial position B of the critical interval B-C, the outgoing gas flow rate towards both outlet conduits 4, 5 is regulated, going from zero flow rate in the initial position OFF to a maximum flow rate in the first outlet conduit 4 and to a minimum flow rate in the second outlet conduit 5 in position B.

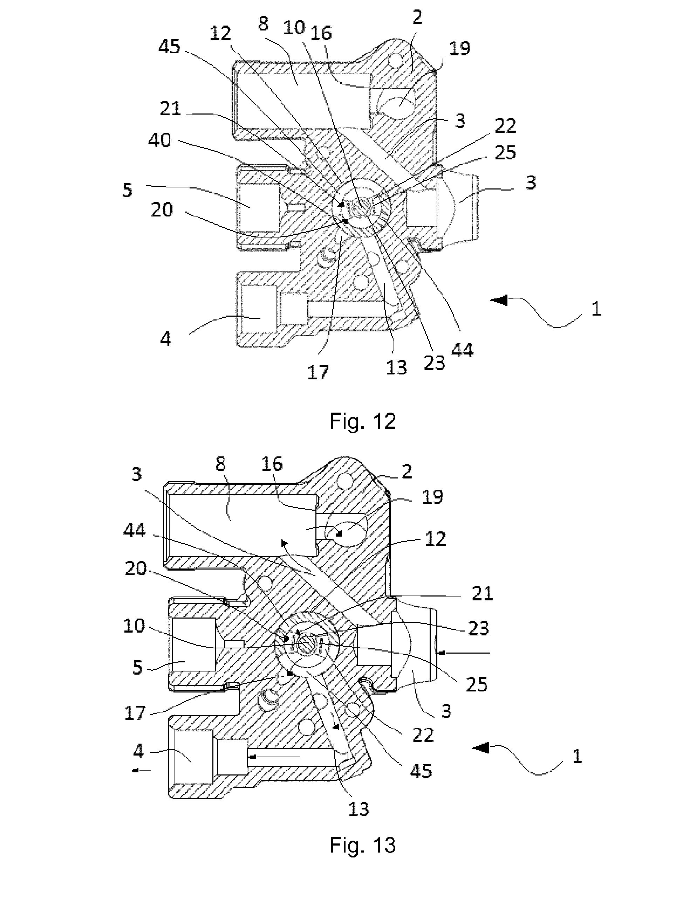

In the initial position OFF, both the first groove 45 and the first hole 44 of the regulating element 40 are not communicated with the first intermediate conduit 13 or with the second intermediate conduit 17, as shown in Figure 12, so gas does not exit through the first outlet conduit 4. After a position, about 30° with respect to the initial position OFF, the gas flows through the first groove 45 until reaching the maximum flow when it reaches the position of 90° with respect to the initial position OFF, in which position the first intermediate conduit 13 is communicated with the first groove 45. As shown in Figure 13, the gas flow towards the outlet conduit 4 is maximum from said position and until the first hole 44 is communicated with the second intermediate conduit 17 when the knob 6 has been turned about 250° from the initial position OFF. After this position and until the final turning position D, the gas flow exits the chamber 12 into the first outlet conduit 4 through the second intermediate conduit 17 communicating with the first intermediate conduit 13, said gas flow being minimal.

On the other hand, with respect to the outgoing gas flow through the second outlet conduit 5 towards the secondary ring, in the initial position OFF, shown in Figure 14, none of the grooves 46, 47 is communicated with the second outlet conduit 5, so no gas exits towards the secondary ring. After a position, about 30° with respect to the initial position OFF, the gas flows through the second groove 47 until reaching the initial position B of the critical interval B-C after which point the knob 6 cannot continue to turn counterclockwise, the flange 7b of the shaft 7 abuts against the first surface 55a of the projection 55 of the cap 55. To keep moving counterclockwise, the user must press the knob 6 axially, moving it to the final axial position and turning the knob 6. In the embodiment shown, that axial movement is greater than 1.0 mm. If the user were to release the knob 6 in that position, he/she would not be able to turn the knob 6 given that in order to turn the knob 6 the user must keep the knob 6 pressed so that the flange 7b can overcome the projection 55 of the cap 50. During the critical interval B-C, the blocking means 21 block the communication of the first chamber 41b of the regulating element 40 with the second outlet conduit 5, as the second groove 46 of the regulating element 40 aligned with the second outlet conduit 5 is blocked, whereas the communication of the first chamber 41b with the intermediate conduit 13 through the first groove 45 of the regulating element 40 for feeding the first outlet conduit 4 continues to be open. During the critical interval B-C, the main ring is fed with the maximum flow rate.

Once the user positions the knob in the final position C of the critical interval B-C, and particularly after this position, when the user turns the knob 6 counterclockwise the flow rate that exits towards the first outlet conduit 4 is regulated from the maximum flow rate in the final position of the critical interval C to the minimum flow rate in the final turning position D of the knob 6.

The passage from the initial position B of the critical interval B-C to the critical interval B-C is not gradual, being able to be considered an abrupt, transition-free passage, whereas the passage from the final position C of the critical interval is gradual as a result of the second curved surface 55b of the projection 55 of the cap 50.

When the user turns the knob 6 counterclockwise, there would be no risk of unburned gas given that it goes from feeding a single ring to feeding both rings at the same time, therefore the passage through the critical interval C-B is progressive as a result of the second curved surface 55b of the projection of the cap 55. As the flange 7b of the shaft 7 advances over the second curved surface 55b, the knob 6 is gradually moved axially to the final axial position without entailing any effort for the user.

## Claims

1. Gas cock adapted to a multiple burner comprising a main ring and at least one secondary ring, comprising the cock (1), a body (2) comprising a gas inlet conduit (3) and gas outlet conduits (4,5), each of which is suitable for conducting gas to the corresponding ring, a regulating element (40) housed in the body (2) and suitable for regulating the incoming gas flow towards at least one of the outlet conduits (4,5) depending on the angular position thereof, and a knob (6) coupled to the regulating element (40), said knob (6) being rotary between an initial turning position and a final turning position, **characterized in that** it comprises safety means (20) blocking the outlet conduit (5) that feeds the secondary ring, in a critical turning interval (B-C) of the knob (6) arranged between the initial turning position (OFF) and the final turning position (D).

2. Gas cock according to the preceding claim, wherein the safety means (20) comprise blocking means (21) suitable for being axially moved into the body (2) from an initial axial position to a final axial position in which they block the outlet conduit (5) that feeds the secondary ring in the critical turning interval (B-C) of the knob (6).

3. Gas cock according to the preceding claim, wherein the safety means (20) comprise a rod (10) coupled to a shaft (7) of the knob (6) through a spring (9), the blocking means (21) being coupled to the rod (10), and locking means (56) which keep the blocking means (21) in the final axial position in the critical interval (B-C).

4. Gas cock according to claim 2 or 3, wherein the blocking means (21) are arranged housed in a cavity (41b) of the regulating element (40) and comprise a support (23) which it is arranged fixed to the rod (10) and at least one blocking element (22) which is arranged adapted to a wall demarcating the cavity (41b).

5. Gas cock according to the preceding claim, wherein the support (23) comprises a substantially ring-shaped base (24) through which it is fixed to the rod (10) and at least one extension (25) extending substantially orthogonally from the base (24), the blocking element (22) being inserted in the extension (25).

6. Gas cock according to any of claims 4 or 5, wherein the blocking means (21) comprise the support (23) and two diametrically arranged blocking elements (22).

7. Gas cock according to claims 4 to 6, wherein the support (23) and the blocking elements (22) form a single part.

8. Gas cock according to claim 2 or 3, wherein the blocking means (21) are housed in a cavity (41b) of the regulating element (40) and comprise a blocking element (22') which is arranged adapted to a wall demarcating the cavity (41b) and a push rod (23') which is fixed to the rod (10) and suitable for axially moving the blocking element (22') from the initial axial position to the final axial position.

9. Gas cock according to the preceding claim, wherein the blocking element (22') comprises a housing (22d') in which an extension (23c') of the push rod (23') is at least partially housed and an opening (22e') on a side surface (22a') arranged in contact with the regulating element (40), the opening (22e') being communicated with the second outlet conduit (5) in the initial axial position and moved with respect to the second outlet conduit (5) in the final axial position.

10. Gas cock according to claims 2 or 3, wherein blocking means (21) are arranged housed in a cavity (41b) of the regulating element (40) and comprise a blocking element (22") which is arranged fixed to the rod (10) and which comprise at least a lateral surface (22a") adapted to a wall delimiting the cavity (41b).

11. Gas cock according to any of claims 4 to 10, wherein the blocking element (22; 22';22") is arranged tightly fitted to and integral with the regulating element (40) with respect to the turning.

12. Gas cock according to any of claims 4 to 10, wherein the blocking element (22; 22';22") is made of an elastomeric material.

13. Gas cock according to claim 2 or 3, wherein the locking means (30) comprise in the shaft (7) of the knob (6), a flange (7b) which prolongs radially and into a cap (50) through which the shaft (7) is fixed to the body (2), a projection (55) extending in an axial direction and cooperating with the flange (7b) to keep the blocking means (21) in the final axial position during the critical interval, said projection (55) preferably extending angularly in the critical interval.

14. Gas cock according to claim 13, wherein the projection (55) comprises a first surface (55a) extending in an axial direction and defining an initial position (B) of the critical interval (B-C), a second curved surface (55b) defining a final position (C) of the critical interval (B-C) and a third surface (55c) against which the flange (7b) of the shaft (7) abuts throughout the critical interval (B-C).

15. Gas cock according to any of the preceding claims, wherein the critical turning interval (B-C) of the knob (6) is arranged between about 175° and about 218° from the initial position (OFF).
